(19) Europäisches Patentamt
European Patent Office
Office européen des brevets

(11) **EP 3 256 697 B1**

(12) **FASCICULE DE BREVET EUROPEEN**

(45) Date de publication et mention de la délivrance du brevet:
**27.07.2022 Bulletin 2022/30**

(21) Numéro de dépôt: **16705981.5**

(22) Date de dépôt: **09.02.2016**

(51) Classification Internationale des Brevets (IPC):
**F01D 9/04** *(2006.01)*      **F04D 29/68** *(2006.01)*
**F02K 3/06** *(2006.01)*

(52) Classification Coopérative des Brevets (CPC):
**F01D 9/041; F01D 9/065; F02K 1/52; F02K 3/06; F04D 29/544; F04D 29/667; F04D 29/681;**
F05D 2220/36; F05D 2240/123; F05D 2260/961; F05D 2260/97; F05D 2270/17; Y02T 50/60

(86) Numéro de dépôt international:
**PCT/FR2016/050275**

(87) Numéro de publication internationale:
**WO 2016/128665 (18.08.2016 Gazette 2016/33)**

(54) **ENSEMBLE DE REDRESSEMENT D'AIR DE TURBOMACHINE À PERFORMANCES AERODYNAMIQUES AMÉLIORÉES**

LEITSCHAUFELANORDNUNG EINES TURBINENMOTORS MIT VERBESSERTER AERODYNAMIK

GUIDE VANE ASSEMBLY OF A TURBOMACHINE WITH IMPROVED AERODYNAMIC PERFORMANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.02.2015 FR 1551011**

(43) Date de publication de la demande:
**20.12.2017 Bulletin 2017/51**

(73) Titulaire: **SAFRAN AIRCRAFT ENGINES**
**75015 Paris (FR)**

(72) Inventeurs:
 • **DAMEVIN, Henri-Marie**
 **77550 Moissy-Cramayel Cedex (FR)**
 • **FESSOU, Philippe, Jacques, Pierre**
 **77550 Moissy-Cramayel Cedex (FR)**
 • **MANIERE, Vianney, Christophe, Marie**
 **77550 Moissy-Cramayel Cedex (FR)**
 • **SCHVALLINGER, Michaël, Franck, Antoine**
 **77550 Moissy-Cramayel Cedex (FR)**

(74) Mandataire: **Regimbeau**
**20, rue de Chazelles**
**75847 Paris Cedex 17 (FR)**

(56) Documents cités:
**EP-A1- 2 944 767       EP-A2- 2 169 182**
**FR-A1- 3 004 749       US-A1- 2011 255 964**
**US-A1- 2013 259 672**

**Description**

DOMAINE DE L'INVENTION

L'invention concerne un ensemble de redressement de flux d'air de turbomachine comprenant des aubes de redresseur et un ou plusieurs bras structuraux. L'invention s'applique en particulier aux turbomachines à double-flux.

ETAT DE LA TECHNIQUE

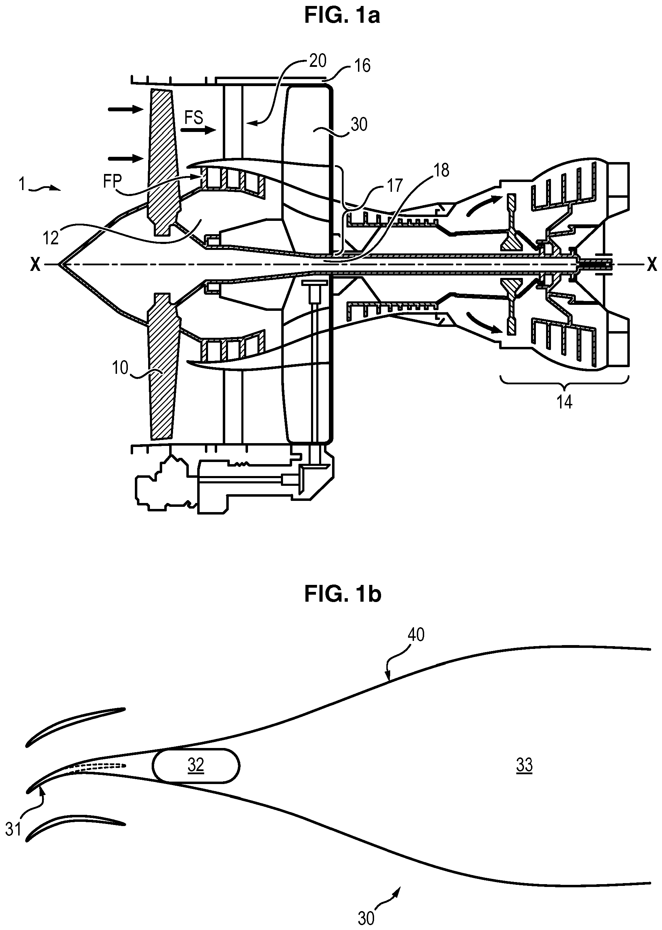

Une turbomachine à double flux pour la propulsion aéronautique est représentée en figure 1a. Elle comprend une soufflante 10 délivrant un flux d'air dont une partie centrale, appelée flux primaire $F_P$, est injectée dans un compresseur 12 qui alimente une turbine 14 entraînant la soufflante.

La partie périphérique, appelée flux secondaire $F_S$, du flux d'air est quant à elle éjectée vers l'atmosphère pour fournir la majeure partie de la poussée de la turbomachine 1, après avoir franchi une couronne 20 d'aubes 21 fixes disposée en aval de la soufflante. Cette couronne, appelée redresseur 20 (également connue sous l'acronyme anglais OGV pour « Outlet Guide Vane »), permet de redresser le flux d'air secondaire en sortie de la soufflante, tout en limitant les pertes au maximum.

Sur la même figure est représenté un bras structural 30, qui relie la virole 16 du carter intermédiaire au moyeu 17 du carter intermédiaire, en contribuant ainsi à supporter et à maintenir en positions le(s) arbre(s) moteur 18 et assurer la tenue structurale de l'ensemble. Le bras structural a aussi pour fonction de permettre la transmission de mouvement ou de fluides entre la turbomachine et le reste de l'aéronef sur lequel elle est montée. Pour ce faire, le bras structural est creux, et permet de loger des canalisations, arbres de transmission, etc.

Plusieurs types de bras structuraux existent, en fonction de leur rôle et de leur position dans la turbomachine.

Par exemple des bras dits « principaux » dont la fonction principale est de soutenir la turbomachine sous l'aile de l'avion, sont disposés à « 6h » et à « 12h », c'est-à-dire verticalement par rapport à l'avion disposé sur un sol horizontal (terminologie comparée avec la position des aiguilles d'une montre).

Des bras structuraux dits « auxiliaires » n'ont pas pour fonction principale de soutenir la turbomachine mais de réaliser une transmission de puissance, en étant creux pour contenir un arbre de transmission. Ces bras sont positionnés par exemple à « 8h », c'est-à-dire oblique par rapport à la verticale.

Tous les types de bras structuraux sont également mis à profit pour faire transiter des servitudes de la turbomachine au reste de l'avion, c'est-à-dire par exemple des canalisations d'huile, de carburant, etc.

Dans le but de réduire la masse d'une turbomachine et d'améliorer ses performances, il a été proposé de regrouper des fonctions de redresseur secondaire et de bras structural en une seule et même pièce, et ceci pour tous les types de bras structuraux.

Comme représenté en figure 1b, il a été proposé des aubes de redresseur dites « intégrées », formées par un bras structural 30, en l'occurrence de type principal décrit ci-avant, dont une partie amont est carénée pour présenter un profil aérodynamique d'aube de redresseur.

Un tel bras structural présente donc des parties contraintes géométriquement qui sont :

- Une partie d'extrémité amont 31, dont la géométrie doit être celle d'une aube de redresseur,
- Une zone creuse 32 de transmission de servitudes, dans laquelle sont disposées canalisations, connexions, le cas échéant arbres de transmission, etc. Cette zone prend en compte un nombre important de contraintes de type encombrement des servitudes, jeux de fonctionnement et de montage, épaisseurs de matière, etc., elle est dite interdite de dessin (ou selon la terminologie anglaise : « keep-out zone »), c'est-à-dire qu'elle doit être maintenue inchangée en cas de changement de géométrie du bras structural, et
- Une partie aval 33 formant le bras structural proprement dit, c'est-à-dire soutenant la turbomachine en position sous l'aile de l'avion tout en supportant les efforts induits par le poids de la turbomachine.

Un bras structural respectant ces contraintes présente donc une paroi extrados 40 formée successivement par :

- La paroi extrados de la partie d'extrémité amont, correspondant à une paroi extrados d'aube de redresseur,
- Une paroi de transition, bordant la zone interdite de dessin 32, cette paroi peut être réalisée en tôle pour alléger la turbomachine, et
- La paroi extrados de la partie aval.

La paroi extrados doit notamment respecter une continuité des surfaces et des tangentes au niveau des transitions entre ses différentes parties.

Du fait des différences de dimension, dans une direction transversale à l'axe de la turbomachine, de la partie d'extrémité amont 31 et de la partie aval 33, la paroi extrados du bras structural obtenue peut présenter une concavité relativement marquée.

Or, d'un point de vue aérodynamique, cette solution n'est pas favorable car elle cause un ralentissement de l'écoulement dans la zone concave de la paroi formée au niveau de la zone de transition.

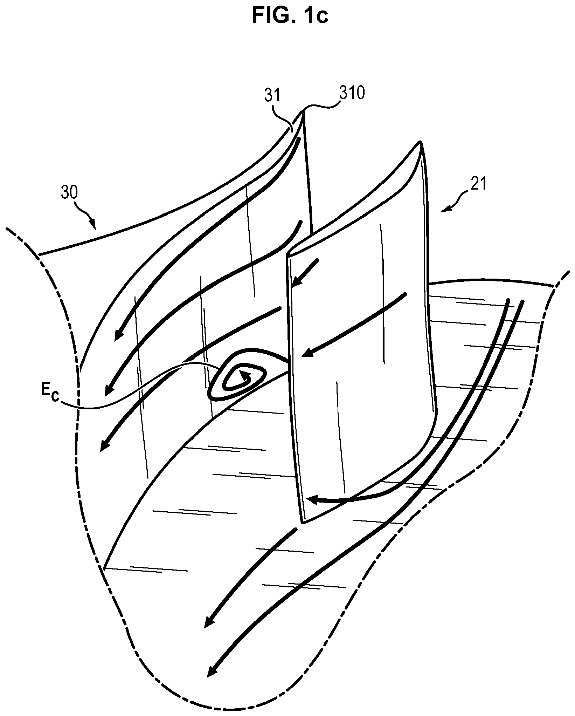

Comme représenté sur la figure 1c, sur laquelle un bras structural est vu de son côté extrados en regardant vers l'amont du flux d'air, dans cette zone de faible vitesse, les écoulements secondaires de coins Ec issus du pied et de la tête de la partie d'extrémité amont en forme d'aube de redresseur s'amplifient et peuvent dégénérer en décollement et/ou recirculation.

Il peut en résulter des pertes de pression significatives dans l'écoulement, ainsi que des distorsions de pression statique remontant en amont du redresseur pouvant nuire aux performances aérodynamiques et aéroacoustiques de la soufflante

Les solutions existantes telles que par exemple la modification de profils d'aubes de redresseur, l'agencement des aubes, etc., présentent chacune des limites liées à la tenue mécanique en statique et dynamique des aubes, la fabricabilité des aubes, etc. De plus, ces solutions, si elles préparent l'écoulement en amont des bras, au niveau de la partie d'extrémité amont, ne permettent pas de prévenir l'apparition de certains écoulements secondaires qui peuvent se développer au niveau de la paroi de transition bordant la zone interdite de dessin. Un exemple est décrit dans le document EP-2169182.

Il existe donc un besoin de remédier aux problématiques posées par cette géométrie.

PRESENTATION DE L'INVENTION

L'invention a pour but de pallier aux inconvénients de l'art antérieur, en proposant un ensemble de redressement du flux d'air présentant des performances aérodynamiques améliorées par rapport à l'art antérieur.

Un but de l'invention est de proposer un ensemble de redressement de flux d'air dont la géométrie supprime les risques de recirculation du flux d'air sur la paroi extrados d'un bras structural comprenant une extrémité amont d'aube de redresseur.

A cet égard, l'invention a pour objet un ensemble de turbomachine, comprenant :

- un redresseur, comportant au moins une aube, comprenant un bord d'attaque et un bord de fuite, et
- un bras structural,

dans lequel l'aube et le bras s'étendent radialement autour d'un axe de la turbomachine, et le bras structural présente :

- une partie d'extrémité amont par rapport à la direction d'écoulement de l'air dans la turbomachine, comprenant un bord d'attaque aligné circonférentiellement avec le bord d'attaque des aubes, présentant un profil identique à l'extrémité amont d'une aube, et la partie d'extrémité amont étant délimitée en aval par une position axiale dite point extrême amont,
- une partie aval, dimensionnée pour former un carénage du pylône de suspension de la turbomachine, et
- une partie intermédiaire reliant la partie d'extrémité amont à la partie aval, comprenant une paroi extrados s'étendant entre un point extrême amont et un point extrême aval de position axiale déterminée,

dans lequel le point extrême amont est situé à une distance, dans la direction axiale, du bord d'attaque du bras comprise entre 0,2c et 0,5c, où c est la longueur de la corde axiale de l'aube de redresseur,

le point extrême aval est situé à une distance, dans la direction axiale, du bord d'attaque du bras, supérieure à la longueur c de la corde axiale de l'aube de redresseur, et en ce que l'angle de la tangente à la paroi extrados au point extrême amont est égal à celui de la tangente à la paroi au point extrême aval à un degré près. Selon l'invention, le point extrême aval se trouve en amont de l'extrémité amont du pylône, la partie aval comprenant une paroi d'extrados qui est convexe à partir du point extrême aval.

Avantageusement, mais facultativement, l'ensemble de redressement selon l'invention comprend en outre au moins l'une des caractéristiques suivantes :

- le point extrême amont est situé à une distance, dans la direction axiale, du bord d'attaque du bras, comprise entre 0,2 et 0,3c, de préférence égale à 0,3c.
- le point extrême aval est situé à une distance, dans la direction axiale, du bord d'attaque du bras, supérieure à la longueur c de la corde axiale de l'aube de redresseur.
- L'ensemble comprend une pluralité de bras structuraux, tous de géométrie identique.

L'invention a également pour objet une turbomachine à double-flux, comprenant un redresseur selon la description qui précède.

L'ensemble de redressement de flux d'air proposé présente des performances aérodynamiques améliorées.

La position axiale du point d'extrémité amont de la zone de transition et l'angle de la tangente en ce point permettent de réduire la concavité de la paroi extrados du bras structural au niveau de cette zone de transition.

De ce fait, l'écoulement d'air est peu ou pas ralenti, ce qui entrave le développement des écoulements de coins issus de la partie d'extrémité amont du bras en profil d'aube de redresseur.

Ainsi, les zones de recirculation sont atténuées, voire annihilées, ce qui permet de réduire les pertes de pression totale dans le redresseur de l'ordre de 0,1%, ainsi que le niveau de distorsion de pression statique dans le redresseur, de l'ordre de 0,2%.

DESCRIPTION DES DESSINS

D'autres caractéristiques, buts et avantages de l'invention ressortiront de la description qui suit, qui est purement illustrative et non limitative, et qui doit être lue en regard des dessins annexés sur lesquels :

- La figure 1a, déjà décrite, représente schématiquement une turbomachine à double-flux.

- La figure 1b, déjà décrite, représente une vue schématique développée d'un ensemble comprenant un bras structural entre deux aubes de redresseur de flux secondaire,
- La figure 1c, déjà décrite, représente les effets aérodynamiques d'un bras structural dont une zone de transition entre la partie amont d'aube de redresseur et la partie aval de bras structural proprement dit présente une concavité marquée,
- La figure 2a représente un ensemble de redressement de flux d'air conforme à un mode de réalisation de l'invention,
- La figure 2b illustre schématiquement une turbomachine conforme à un mode de réalisation de l'invention.
- La figure 3 représente schématiquement le flux d'air entre un bras structural et une aube de redresseur représentée à l'extrados de celui-ci.

## DESCRIPTION DETAILLEE D'AU MOINS UN MODE DE REALISATION DE L'INVENTION

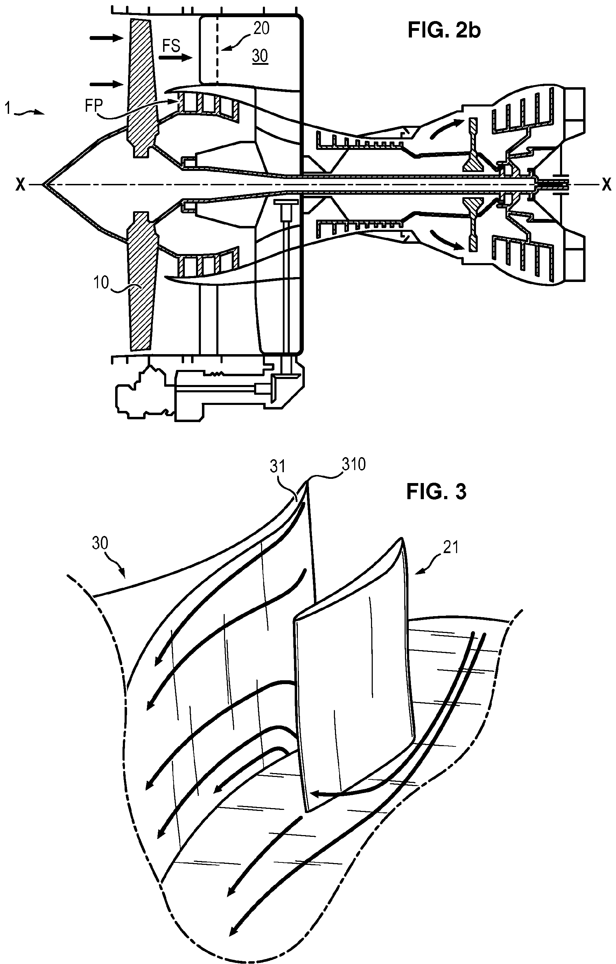

En référence à la figure 2b, on a représenté une turbomachine 1 à double flux comprenant, comme décrit précédemment, une soufflante 10 et un redresseur 20 de type OGV, pour redresser un flux secondaire FR provenant de la soufflante 10.

Le redresseur 20 comprend une pluralité d'aubes 21 réparties régulièrement autour d'un anneau (non représenté) centré sur un axe X-X de la turbomachine, correspondant à l'axe de l'arbre moteur.

En outre la turbomachine 1 comprend au moins un bras structural 30 décrit plus en détails ci-après. Plus précisément, la turbomachine 1 comprend une pluralité de bras structuraux 30 s'étendant sensiblement radialement autour de l'axe X-X. Un de ces bras structuraux 30 a pour fonction de fournir un carénage à un pylône (non représenté) permettant de suspendre le moteur à l'aile de l'avion sur lequel il est monté, et qui est dimensionné pour soutenir le poids du moteur. Le pylône sert également de lieu de passage de certaines servitudes.

Le bras structural qui carène le pylône de suspension du moteur s'étend dans une direction verticale entre l'aile de l'avion et l'axe X-X de la turbomachine. En regardant la turbomachine depuis l'avant ou l'arrière en direction de l'axe, ce bras s'étend à « douze heures ».

La turbomachine 1 peut comporter au moins un autre bras structural 30, par exemple disposé à « six heures », c'est-à-dire verticalement, et entre l'axe X-X et le sol, en étant aligné avec le premier bras structural. Ce bras structural 30 ne sert pas à caréner un pylône de suspension du moteur mais présente néanmoins une forme identique au premier bras décrit ci-avant. La turbomachine peut aussi comporter un ou plusieurs autres bras structuraux identiques 30 au premier bras décrit ci-avant.

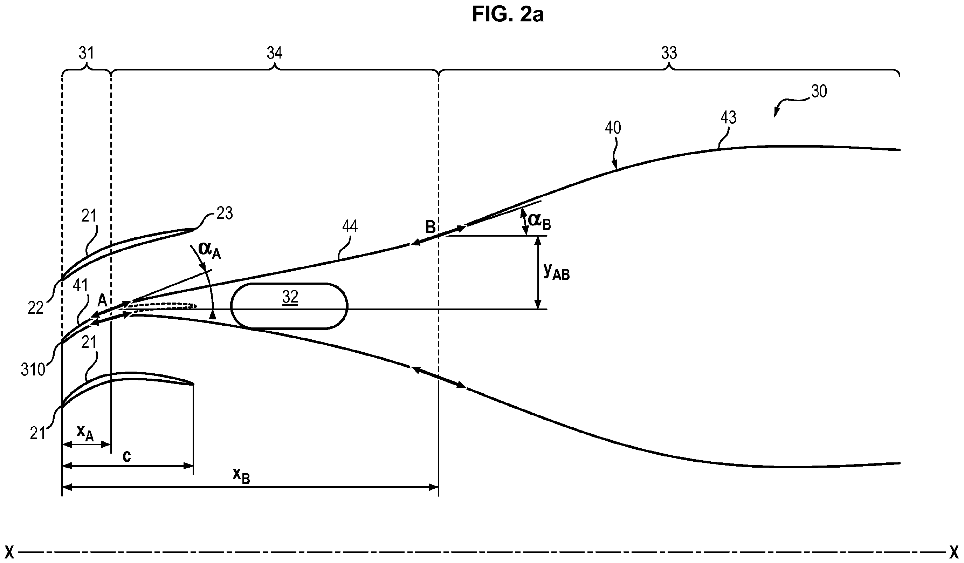

Sur la figure 2a, on a représenté une vue en développé d'un secteur d'angle autour de l'axe X-X couvert par deux aubes 21 du redresseur, entre lesquelles se trouve un bras structural 30. Chaque aube située de part et d'autre du bras 30 définit avec lui une veine d'écoulement l'air dans lequel l'air se déplace d'amont en aval, représenté sur la figure de gauche à droite.

Dans la suite, les termes amont et aval sont toujours utilisés par rapport à la direction du flux d'air dans la turbomachine, et en particulier par rapport à la direction du flux d'air dans les veines, de gauche à droite sur la figure.

On nomme également ensemble de redressement de flux d'air un ensemble comprenant au moins l'un des bras structuraux 30 de la turbomachine, et le redresseur. La géométrie du bras décrite ci-après permet d'améliorer l'écoulement de l'air entre le bras et une aube 21 du redresseur 20 située sur l'extrados du bras.

Chaque aube 21 comprend classiquement un bord d'attaque 22 et un bord de fuite 23. La corde axiale d'une aube 21 est le segment s'étendant parallèlement à l'axe X-X, de la position axiale du bord d'attaque 22 à la position axiale du bord de fuite 23. On note c la longueur de la corde axiale des aubes 21.

Le bras structural 30 est du type « aube de redresseur intégrée », c'est-à-dire qu'il comprend une partie d'extrémité amont 31 présentant le profil d'une aube de redresseur. Ainsi, la partie d'extrémité amont 31 du bras structural 30 est présente à l'identique à l'extrémité amont de chaque aube 21 de redresseur 20.

En particulier, la partie d'extrémité amont 31 présente un bord d'attaque 310 aligné avec celui des aubes 21 du redresseur 20, c'est-à-dire au même niveau par rapport à l'axe X-X, et présente, au moins au niveau de son bord d'attaque, la même épaisseur et le même angle de cambrure qu'une aube 21 du redresseur 20, l'angle de cambrure étant l'angle entre la ligne de cambrure, à mi-distance entre la surface intrados et la surface extrados d'une aube 21, avec l'axe X-X.

La partie d'extrémité amont 31 du bras structural 30 est délimitée axialement en aval par un point A et en amont par le bord d'attaque 310. Toute la partie du bras 30 s'étendant, axialement, du bord d'attaque 310 au point A est donc contrainte géométriquement pour être identique à la portion des aubes 21 du redresseur s'étendant du bord d'attaque de chaque aube à une section se trouvant à la même position axiale que le point A.

Le bras structural 30 comprend également une partie aval 33, et une partie intermédiaire 34 reliant la partie d'extrémité amont avec la partie aval 33.

Comme indiqué ci-avant, le bras structural 30 est avantageusement du type bras « principal » indiqué ci-avant, dont la fonction principale est de soutenir la turbomachine sous l'aile de l'avion tout en supportant les efforts générés par le poids de la turbomachine, ou en tout état de cause il présente une géométrie identique à celle d'un bras principal carénant un pylône de support du moteur.

Cette fonction est remplie par la partie aval 33, dont les parois sont avantageusement réalisées en fonderie pour supporter ces efforts importants.

En outre, la géométrie de la partie aval 33 du bras carénant le pylône, et donc de la partie aval 33 de tous les autres bras 30 qui lui sont identiques, est contrainte par l'avionneur en fonction de la géométrie du pylône et du type d'avion sur lequel la turbomachine est montée. On considèrera donc de manière générale que la partie aval 33 de chaque bras structural de l'ensemble est dimensionnée pour pouvoir caréner le pylône de suspension de la turbomachine, même si seul le bras structural à douze heures entoure effectivement un pylône de suspension.

Les parois de la partie intermédiaire 34 présentent pour fonction de relier la partie amont 31 avec la partie aval 33 en évitant toute discontinuité de surface ou de tangence. En revanche, elles ne nécessitent pas de supporter le poids de la turbomachine comme celles de la partie aval 33. Par conséquent, elles sont avantageusement réalisées en tôle afin d'alléger le poids de la turbomachine.

De plus la partie intermédiaire 34 peut comporter une zone 32 dite interdite de dessin, qui est un logement dédié à l'implantation des servitudes, et notamment au logement de canalisations, par exemple d'huile ou de carburant, de connexions électriques, le cas échéant d'arbres de transmission, etc.

Le bras structural 30 comporte une paroi extrados 40 formée par :

- Une paroi extrados 41 de la partie d'extrémité amont,
- Une paroi extrados 44 de la partie intermédiaire 34, et
- Une paroi extrados 43 de la partie aval 33.

La paroi extrados 44 de la partie intermédiaire est délimitée par deux points extrêmes, respectivement à l'amont par le point A et en aval par un point B dit point extrême aval.

Le point extrême amont A se trouve à liaison entre les parois extrados de la partie d'extrémité amont 41 et de la partie intermédiaire 44. Comme indiqué ci-avant, la partie d'extrémité amont 31 du bras est contrainte pour être identique à une partie amont correspondante d'une aube 21. Par conséquent, à position axiale (par rapport à l'axe X-X) fixée d'un point sur la paroi extrados 41 de la partie amont, la position de ce point en azimut (axe y sur la figure) est également fixée.

Le point extrême aval B se trouve à la liaison entre les parois extrados de la partie intermédiaire 44 et de la partie aval 43. La position axiale du point extrême aval B se trouve en amont de l'extrémité amont du pylône de suspension de la turbomachine.

La géométrie décrite ci-après pour le bras structural permet à la paroi extrados de la partie intermédiaire 34 d'être le moins concave possible pour diminuer les recirculations d'air.

En premier lieu, la position axiale $x_B$ du point extrême B doit se trouver à une distance de la position axiale du bord d'attaque du bras supérieure ou égale à la longueur de la corde d'une aube 21, et de préférence strictement supérieure.

On note :

$$x_B \geq c$$

En prenant pour origine de l'axe X-X la position axiale du bord d'attaque du bras et des aubes.

En effet, plus la distance axiale entre le point B et le point A est importante, plus la transition réalisée par la paroi de la partie intermédiaire 44 est douce et limite les concavités.

De plus, la position axiale $x_A$ du point extrême amont A est de préférence à une distance, mesurée dans la direction de l'axe X-X, de la position axiale du bord d'attaque 310 du bras, comprise entre 0,2c et 0,5c.

On note :

$$0.2c \leq x_A \leq 0.5c$$

Le fait que le point A se trouve à une distance axiale du bord d'attaque 310 d'au moins 20% de la corde permet à la partie d'extrémité amont 31 du bras d'être suffisamment longue pour présenter sur le flux d'air entrant un effet similaire à celui d'une aube 21 de redresseur. En particulier, cela limite la distorsion de pression statique sur l'ensemble du redresseur 20, et des remontées de distorsion de pression à la soufflante en amont du redresseur. Les performances acoustiques et aérodynamiques de la soufflante sont donc améliorées.

De plus, le fait que le point A se trouve à une distance axiale du bord d'attaque inférieure à 50% de la longueur de la corde d'une aube lui permet d'une part d'être suffisamment éloigné du point B, ce qui allonge la longueur de la partie intermédiaire et permet d'en diminuer la concavité.

D'autre part, positionner le point A au-delà de cette distance axiale le rapprocherait de la zone interdite de dessin 35. Par conséquent, la paroi extrados 44 de la partie intermédiaire devrait présenter une concavité accrue pour contourner cette zone et relier le point B, ce qui provoquerait un accroissement des recirculations d'air au niveau de cette paroi.

De préférence, la position axiale $x_A$ du point extrême amont A est même à une distance du bord d'attaque 310 inférieure à 0,3c, et très avantageusement égale à 0,3c, pour optimiser les effets décrits ci-dessus.

En outre, l'angle $\alpha_A$ de la tangente à la paroi extrados 40 du bras 30 par rapport à l'axe X-X au niveau du point A est avantageusement proche de celui $\alpha_B$ de la tangente à la paroi 40 au niveau du point B.

De préférence, l'angle $\alpha_A$ est égal à l'angle $\alpha_B$ au degré près - $\alpha_A$ pouvant donc prendre toutes les valeurs entre $\alpha_B$ - 1 et $\alpha_B$ + 1 :

$$\alpha_A = \alpha_B \pm 1°$$

Ainsi la concavité de la paroi extrados 44 de la partie intermédiaire est minimisée.

Le cas échéant, l'angle $\alpha_B$ de la tangente au point B, et/ou la position, sur un axe orthogonal à l'axe X-X, du point B, qui sont normalement imposés en fonction de la géométrie de la partie aval 33 du bras structural, et de la position en azimut du bras 30 par rapport au redresseur, peuvent être légèrement adaptés de manière à respecter la relation ci-dessus, puisque cette relation correspond à :

$$\tan \alpha_A = \tan(\alpha_B \pm 1°) \approx \frac{y_{AB}}{x_{AB}}$$

où $y_{AB}$ est la distance, mesurée sur un axe orthogonal à l'axe X-X, entre le point A et le point B, et $x_{AB}$ est la distance, mesurée axialement c'est-à-dire parallèlement à l'axe X-X, entre ces mêmes points.

En référence à la figure 3, on a représenté le flux d'air dans un ensemble de redressement comprenant un redresseur 20 et un bras structural 30 conforme à la géométrie décrite ci-avant, le bras structural étant vu sur son côté extrados en regardant vers l'amont.

On constate que, plutôt que d'essayer d'affiner le bras pour en réduire l'obstruction aérodynamique, il est préférable d'épaissir le côté extrados en réduisant la concavité de la paroi 44 au niveau de la partie intermédiaire 34 pour limiter l'apparition de recirculations.

**Revendications**

1. Ensemble de redressement de flux d'air pour turbomachine, la turbomachine comprenant un pylône de suspension de la turbomachine à une aile d'aéronef, l'ensemble comprenant :

    - un redresseur (20) comportant des aubes (21), chaque aube (21) comprenant un bord d'attaque (22) et un bord de fuite (23), et
    - au moins un bras structural (30),

dans lequel les aubes (21) et le bras (30) s'étendent radialement autour d'un axe (X-X) de la turbomachine, et le bras structural présente :

    - une partie d'extrémité amont (31) par rapport à la direction d'écoulement de l'air dans la turbomachine, comprenant un bord d'attaque (310) aligné circonférentiellement avec le bord d'attaque (22) des aubes, et présentant un profil identique à celui de l'extrémité amont des aubes (21), la partie d'extrémité amont (31) étant délimitée en aval par une position axiale dite point extrême amont (A),
    - une partie aval (33), dimensionnée pour former un carénage d'un pylône de suspension de la turbomachine, et
    - une partie intermédiaire (34) reliant la partie d'extrémité amont (31) à la partie aval (33), comprenant une paroi extrados (44) continue s'étendant entre le point extrême amont (A) et un point extrême aval (B) de position axiale déterminée,

dans lequel le point extrême amont (A) est situé à une distance ($x_A$), dans la direction axiale, du bord d'attaque (310) du bras comprise entre 0,2c et 0,5c, où c est la longueur de la corde axiale des aubes (21) de redresseur,

    le point extrême aval (B) est situé à une distance ($x_B$), dans la direction axiale, du bord d'attaque (310) du bras, supérieure à la longueur c de la corde axiale des aubes (21) de redresseur, et l'angle ($\alpha_A$) de la tangente à la paroi extrados (44) au point extrême amont (A) est égal à celui de la tangente ($\alpha_B$) à la paroi (44) au point extrême aval (B) à un degré près,
    **caractérisé en ce que** le point extrême aval (B) se trouve en amont de l'extrémité amont du pylône,
    la partie aval (33) comprenant une paroi d'extrados (43) qui est convexe à partir du point extrême aval (B).

2. Ensemble de redressement de flux d'air selon la revendication 1, dans lequel le point extrême amont (A) est situé à une distance ($x_A$), dans la direction axiale, du bord d'attaque (310) du bras, comprise entre 0,2 et 0,3c, de préférence égale à 0,3c.

3. Ensemble de redressement de flux d'air selon l'une des revendications 1 ou 2, comprenant une pluralité de bras structuraux, tous de géométrie identique.

4. Turbomachine (A) à double-flux, comprenant un ensemble selon l'une des revendications qui précèdent.

**Patentansprüche**

1. Luftstrom-Aufrichtgruppe für eine Turbomaschine, wobei die Turbomaschine eine Aufhängungspylone der Turbomaschine an einem Luftfahrzeugflügel umfasst, wobei die Gruppe umfasst:

    - einen Aufrichter (20), umfassend Turbinenschaufeln (21), wobei jede Turbinenschaufel eine Stirnkante (22) und eine Hinterkante (23) umfasst und
    - wenigstens einen Strukturarm (30),

bei der die Turbinenschaufeln (21) und der Arm (30) sich radial um eine Achse (X-X) der Turbomaschine erstrecken und der Strukturarm aufweist:

- einen in Bezug auf die Abströmrichtung der Luft in der Turbomaschine vorgeschalteten Endteil (31), umfassend eine Stirnkante (310), die umlaufend mit der Stirnkante (22) der Turboschaufeln gefluchtet ist, und aufweisend ein Profil, das mit dem vorgeschalteten Ende der Turboschaufeln (21) identisch ist, wobei der vorgeschaltete Endteil (31) nachgeschaltet durch eine axiale Position, bezeichnet als vorgeschalteter Endteil (A), begrenzt ist,
- einen nachgeschalteten Teil (33), der zum Bilden einer Verkleidung einer Aufhängungspylone der Turbomaschine ausgelegt ist, und
- einen Zwischenteil (34), der den vorgeschalteten Endteil (31) mit dem nachgeschalteten Teil (33) verbindet, umfassend eine kontinuierliche Blattrückseitenwand (44), die sich zwischen dem vorgeschalteten Endpunkt (A) und einem nachgeschalteten Endpunkt (B) einer bestimmten axialen Position erstreckt,

in der der vorgeschaltete Endpunkt (A) in einer Entfernung $(X_A)$ in der axialen Richtung von der Stirnkante (310) des Arms angeordnet ist, die zwischen 0,2c und 0,5c inbegriffen ist, bei der c die Länge der axialen Sehne der Aufricht-Turboschaufeln (21) ist,

der nachgeschaltete Endpunkt (B) in einer Entfernung $(X_B)$ in der nachgeschalteten Richtung von der Stirnseite (310) des Arms angeordnet ist, die größer ist als die Länge c der axialen Sehne der Aufricht-Turboschaufeln (21), und der Winkel $(\alpha_A)$ der Tangente an der Blattrückseitenwand (44) am vorgeschalteten Endpunkt (A) gleich der der Tangente $(\alpha_B)$ an der Wand (44) am nachgeschalteten Endpunkt (B) bis auf einen Grad gleich ist, **dadurch gekennzeichnet, dass** der nachgeschaltete Endpunkt (B) dem vorgeschalteten Ende der Pylone vorgeschaltet ist, wobei der nachgeschaltete Teil (33) eine Blattrückseitenwand (43) umfasst, die ausgehend vom nachgeschalteten Endpunkt (B) konvex ist.

2. Luftstrom-Aufrichtgruppe gemäß Anspruch 1, bei der der vorgeschaltete Endpunkt (A) in einer Entfernung $(X_A)$ in der axialen Richtung von der Stirnseite (310) des Arms angeordnet ist, die zwischen 0,2 und 0,3c inbegriffen ist, bevorzugt gleich 0,3c ist.

3. Luftstrom-Aufrichtgruppe gemäß einem der Ansprüche 1 oder 2, umfassend eine Vielzahl von Strukturarmen, alle mit identischer Geometrie.

4. Turbomaschine (A) mit doppeltem Strom, umfassend eine Gruppe gemäß einem der voranstehenden Ansprüche.

**Claims**

1. An air flow straightening assembly for a turbomachine, the turbomachine comprising a pylon for suspending the turbomachine to an aircraft wing, the assembly comprising:

- a straightener (20) including vanes (21), each vane (21) comprising a leading edge (22) and a trailing edge (23), and
- at least one structural arm (30),

wherein the vanes (21) and arm (30) extend radially about an axis (X-X) of the turbomachine, and the structural arm has:

- an upstream end part (31) relative to the air flow direction in the turbomachine, comprising a leading edge (310) circumferentially aligned with the leading edge (22) of the vanes, and having a profile identical to the upstream end of the vanes (21), the upstream end part (31) being delimited downstream by an axial position called an upstream extreme position (A),
- a downstream part (33), dimensioned to form a shroud of a pylon for suspending the turbomachine, and
- an intermediate part (34) connecting the upstream end part (31) to the downstream part (33), comprising a continuous upper surface wall (44) extending between the upstream extreme point (A) and a downstream extreme point (B) with a determined axial position,

wherein the upstream extreme point (A) is located at a distance $(X_A)$, in the axial direction, from the leading edge (310) of the arm of between 0.2c and 0.5c, where c is the length of the axial chord of the straightener vanes (21),

the downstream extreme point (B) is located at a distance $(X_B)$, in the axial direction, from the leading edge (310) of the arm, greater than the length c of the axial chord of the straightener vanes (21), and the angle $(\alpha_A)$ from the tangent to the upper surface wall (44) to the upstream extreme point (A) is equal to that from the tangent $(\alpha_B)$ to the wall (44) to the downstream extreme point (B) to within one degree, **characterised in that** the downstream extreme point (B) is situated upstream of the upstream end of the pylon,

the downstream part (33) comprising an upper surface wall (43) which is convex from the downstream extreme point (B).

2. The air flow straightening assembly according to claim 1, wherein the upstream extreme point (A) is located at a distance $(X_A)$, in the axial direction, from the leading edge (310) of the arm, of between 0.2 and 0.3c, preferably equal to 0.3c.

3. The air flow straightening assembly according to one of claims 1 or 2, comprising a plurality of structural arms, all with an identical geometry.

4. A double flow turbomachine (A), comprising an assembly according to one of the preceding claims.

# FIG. 1a

# FIG. 1b

# FIG. 1c

## FIG. 2a

EP 3 256 697 B1

**FIG. 2b**

**FIG. 3**

## RÉFÉRENCES CITÉES DANS LA DESCRIPTION

**Documents brevets cités dans la description**

- EP 2169182 A